# EUROPÄISCHE PATENTSCHRIFT

(11) **EP 4 009 010 B1**
(45) Veröffentlichungstag und Bekanntmachung des Hinweises auf die Patenterteilung: **04.10.2023**
(21) Anmeldenummer: 20211219.9
(22) Anmeldetag: 02.12.2020
(51) Int. Cl.: G01F 15/00, B67D 7/00, F17C 5/06, G01F 25/00, G01F 1/00

(54) **MESSSYSTEM ZUM ERMITTELN EINER ABGEGEBENEN WASSERSTOFFMENGE SOWIE VERFAHREN HIERZU**
MEASURING SYSTEM FOR DETERMINING A QUANTITY OF HYDROGEN EMITTED AND METHOD THEREOF
SYSTÈME DE MESURE POUR DÉTERMINER UNE QUANTITÉ LIVRÉE D'HYDROGÈNE ET PROCÉDÉ ASSOCIÉ

(43) Veröffentlichungstag der Anmeldung: 08.06.2022
(73) Patentinhaber: ITS Ingenieurbüro T. Steuer, 85221 Dachau (DE); TrigasDM GmbH, 85375 Neufahrn (DE)
(72) Erfinder: Mandt, Jessica, 85375 Neufahrn (DE); Stöckle, Christian, 85375 Neufahrn (DE); Steuer, Thomas, 85221 Dachau (DE)
(74) Vertreter: Wunderlich & Heim Patentanwälte Partnerschaftsgesellschaft mbB

(56) Entgegenhaltungen:
- WO-A1-2019/230651
- DE-T5-112011 101 417
- US-A1- 2015 267 865
- US-A1- 2017 254 479
- US-A1- 2020 173 607
- US-B1- 6 708 573
- US-B2- 10 288 367

## Beschreibung

Die Erfindung betrifft ein Messsystem zum Ermitteln einer abgegebenen Wasserstoffmenge einer Wasserstoffabgabestelle von einer dort vorhandenen Wasserstoffabgabeeinheit an einen Aufnahmetank. Hierfür ist in dem Messsystem eine Messeinheit vorgesehen.

Bei der Wasserstoffabgabestelle kann es sich beispielsweise um eine Wasserstofftankstelle handeln, wobei die Wasserstoffabgabeeinheit die entsprechende Zapfstelle oder -säule ist.

Die Erfindung betrifft weiter ein Verfahren zum Ermitteln der abgegebenen Wasserstoffmenge einer Wasserstoffabgabestelle, insbesondere einer Wasserstofftankstelle, mit einer Wasserstoffabgabeeinheit an einen Aufnahmetank.

Neben der Elektrifizierung von Fahrzeugen stellt die Verwendung von Wasserstoff als Energielieferant eine weitere Möglichkeit dar, Mobilität umweltfreundlicher zu realisieren. Das Verwenden von Wasserstoff hat gegenüber der Verwendung von Elektrizität zur Zeit den Vorteil, dass die Tankvorgänge im Vergleich zum Laden einer Batterie deutlich schneller vorgenommen werden können und die Reichweiten der Brennstoffzellen-Fahrzeuge deutlich größer ist, als der von rein batterieelektrischen Fahrzeugen. Auch besteht die Problematik der Entsorgung der oft hochgiftigen Batterien nicht.

Ein Wasserstoff-Tankstellennetz besteht allerdings noch nicht beziehungsweise noch nicht in ausreichend dichter Form. Beim Betreiben und Bauen einer WasserstoffTankstelle sind verschiedene nationalen Vorgaben zu beachten. Beispielsweise ist es in Deutschland notwendig eichrechtlich zu überprüfen, ob die an der Tankstelle angegebenen Abgabemenge, also die getankte und somit abgegebene Menge Wasserstoff, mit der wirklich abgegebenen Menge übereinstimmt.

Gängige Tankvorgänge werden mit verschiedenen Druckbereichen von etwa 20 bar bis ca. 700 bar durchgeführt. Derart hohe Drücke sind vorgesehen, um den Tankvorgang möglichst schnell durchzuführen, so dass ähnliche Tankzeiten wie bei flüssigen Kraftstoffen, wie Benzin oder Diesel, erreicht werden können.

Dies hat jedoch die Folge, dass sich der in einem Tank eingebrachte Wasserstoff beim Komprimieren erwärmt. Konstruktionsbedingt sind derartige Tanks bis maximal 90°C zu belasten. Um nicht unnötigerweise den Tankvorgang zu früh abbrechen zu müssen und schnell zu betanken, wird der Wasserstoff gekühlt, so dass er eine Temperatur zwischen - 20°C bis zu - 40°C aufweist.

Für die notwendigen Eichvorgänge sind zurzeit im Wesentlichen gravimetrische Systeme bekannt.

Hierbei ist ein Aufnahmetank auf einem Anhänger montiert und weist eine integrierte, hochgenaue Waage auf. Dieser Tank wird mittels der Wasserstoffabgabeeinheit betankt. Anschließend wird die Gewichtszunahme, die im Bereich von 1kg bis 4kg liegt, hochgenau festgestellt. Diese Größe wird mit der von der Tankstelle angegebenen Messgröße verglichen, um so eine Eichung durchzuführen.

Problematisch an diesen Systemen ist jedoch, dass sie äußerst sensibel und fehleranfällig sind. So hat der Tank mit Aufbau meist ein Gewicht von ca. 400kg, wobei lediglich ein Bruchteil des Gewichts zugetankt wird - 1kg bis 4kg Wasserstoff. Aufgrund der notwendigen hoch genauen Auflösung der Waage ist jedoch der Anhänger, auf welchem sich der Tank befindet, sehr anfällig auf Umwelteinflüsse. So ist bereits die Winddrucklast auf den Anhänger auf Waage sichtbar. Somit kann die Messung idealerweise nur bei gutem Wetter und in den Sommermonaten durchgeführt werden.

Ein weiteres Problem ist in der Leerung des Tanks zu sehen. Um verlässliche Messungen durchzuführen, ist es eichrechtlich notwendig, mindestens drei kontinuierliche Messungen vorzulegen. Jedoch kann der Tank nur relativ langsam entleert werden, da er anderenfalls durch eine schnelle Expansion des Wasserstoffes beschädigt werden könnte und in seiner Struktur Schäden entstehen könnten. Auch kühlt der sich expandierende Wasserstoff beim Abblasen stark ab, so dass Kondensat auf dem Tank entsteht. Das Kondensat wiederum führt zu erheblichen Messabweichungen.

Dazu wird zur Zeit der abgelassene Wasserstoff in die Umwelt abgeblasen, ohne dass er genutzt wird. Hierzu muss extra ein Kamin, mindestens 20 Meter von der Tankstelle entfernt, aufgebaut werden, um ein sicheres Abblasen des Wasserstoffes zu gewährleisten.

All dies hat zur Folge, dass eine entsprechende Eichkampagne 3 bis 4 Tage dauert und solange die Tankstelle blockiert ist. Hierbei ist zu berücksichtigen, dass es eine derartige Eichung alle 1 bis 2 Jahre durchgeführt werden soll.

Aus der US 2020/173607 A1 ist ein Systeme bekannt, das zur Abgabe von Wasserstoff an Verbraucher wie ein Kfz geeignet ist, bei der Durchfluss bestimmt wird.

Der Erfindung liegt daher die **Aufgabe** zugrunde, ein effizientes Messsystem und Messverfahren, mit denen die abgegebene Wasserstoffmenge von einer Wasserstoffabgabeeinheit an einen Aufnahmetank gemessen wird, bereitzustellen.

Diese Aufgabe wird erfindungsgemäß durch ein System mit den Merkmalen des Anspruchs 1 sowie ein Messverfahren mit den Merkmalen des Anspruchs 13 gelöst.

Weitere vorteilhafte Ausführungsformen sind in den abhängigen Ansprüchen, der Beschreibung sowie in den Figuren und deren Beschreibung angegeben.

Entsprechend der Erfindung ist vorgesehen, dass die Messeinheit einen Durchflussmesser aufweist, der zwischen der Wasserstoffabgabeeinheit und dem Aufnahmetank anordenbar ist. Ferner ist das Messsystem ausgebildet, eine fluiddichte Verbindung zwischen der Wasserstoffabgabeeinheit und dem Aufnahmetank aufzubauen und den von der Wasserstoffabgabeeinheit abgegebenen Wasserstoff durch den Durchflussmesser zum Aufnahmetank zu leiten. Weiter ist vorgesehen, dass der Durchflussmesser eine aktive Kühlung aufweist.

Ein Grundgedanke der Erfindung kann darin gesehen werden, dass es mit entsprechend weiteren Mitteln möglich ist, die abgegebene Wasserstoffmenge mit einem Durchflussmesser hochgenau zu ermitteln. Hierbei ist zu berücksichtigen, dass der Durchflussmesser vor der Abgabe meist Raumtemperatur beziehungsweise Außentemperatur hat. Dies heißt, die Temperaturen können sich zwischen +5°C und +40°C belaufen. Wie bereits erläutert, hat der gasförmige hochkomprimierte Wasserstoff eine Temperatur von bis zu - 40°C. Dies hat zur Folge, dass bei den erforderlichen hochgenauen Durchflussmessern bei dem Durchführen von Messungen ein hoher Nullpunktdrift vorliegen würde, so dass die eichrechtlich erforderte Genauigkeit der Messung nicht erreicht werden könnte.

Entsprechend der Erfindung wurde jedoch erkannt, dass dieses Problem umgangen werden kann, sofern der Durchflussmesser aktiv gekühlt wird. Anders ausgedrückt, ist eine aktive Kühlung vorgesehen, die den Durchflussmesser vor einer Messung bereits auf Temperaturen im Bereich zwischen - 30°C und - 50°C kühlt, so dass beim Durchleiten des hochkomprimierten und gekühlten Wasserstoffs keine oder im Wesentlichen keine Änderung der Temperatur im Durchflussmesser mehr auftritt.

Mittels der Erfindung ist es so möglich, eine Messkampagne in deutlich kürzerer Zeit und relativ unabhängig von den Außentemperaturen durchzuführen.

Entsprechend der Erfindung ist es bevorzugt, wenn die aktive Kühlung als externe Kühlung des Durchflussmessers vorgesehen ist. Dies kann insbesondre auch bedeutet, dass die aktive Kühlung kein Teil des Durchflussmessers selbst ist, sondern als weiteres Bauteil oder Aggregat hinzugefügt werden kann.

Grundsätzlich sind verschiedene Möglichkeiten der aktiven Kühlung denkbar. So kann beispielsweise ein Peltier-Element oder auch eine klassische Kompressorkühlung hierfür eingesetzt werden. Es ist jedoch bevorzugt, wenn die aktive Kühlung mittels eines externen Kühlmaterials durchgeführt wird. Hierfür eignet sich insbesondere Trockeneis.

Eine Wasserstofftankstelle gilt als explosionsgefährdete Zone und wird als Ex-Zone 1 eingeordnet. Dies bedeutet, dass alle dort vorhandenen Geräte entsprechend explosionsgeschützt ausgebildet sein müssen. Hierbei zeigt sich insbesondere der Vorteil eines externen, insbesondere energieversorgungslosen, Kühlmaterials, bei dem es sich beispielsweise um Trockeneis handeln kann.

Trockeneis ist nicht brennbar und weist eine Temperatur von ca. -78°C auf. Es ist grundsätzlich kostengünstig zu beschaffen und, abgesehen von den kalten Temperaturen, auch einfach zu handhaben. Somit ergeben sich keine Probleme bezüglich der Ex-Zone beziehungsweise dem notwendigen Explosionsschutz. Bei Trockeneis handelt es sich um festes Kohlenstoffdioxid (CO₂). Es hat auch den Vorteil, dass es bei Außentemperatur gasförmig ist, also verdampft. Generell sind aber auch andere Kältespeicher geeignet.

Bevorzugt ist es, wenn eine Aufnahmeeinrichtung mit thermischem Kontakt zum Durchflussmesser in der Messeinheit ausgebildet ist. So ist es möglich, in die Aufnahmeeinrichtung das externe Kühlmaterial einzubringen und den Durchflussmesser möglichst effizient und einfach zu kühlen. Die Aufnahmeeinrichtung kann beispielsweise wannenartig ausgebildet sein.

Hierfür kann die Aufnahmeeinrichtung beispielsweise als von außen zugänglicher Hohlraum ausgebildet sein. Dies kann in Form einer einfachen Kammer realisiert sein, die eine entsprechende Klappe aufweist, so dass sie zugänglich ist. Durch einen Verschluss der Klappe kann sichergestellt werden, dass während des Durchführens einer Messung möglichst wenig Umwelteinflüsse über diese Kammer auf den Durchflussmesser einwirken.

Die thermische Kopplung zwischen der Aufnahmeeinrichtung und dem Durchflussmesser kann auf verschiedene Arten realisiert sein. Eine Möglichkeit ist es, hierbei eine Wand der Aufnahmeeinrichtung durch einen Teil des Körpers des Durchflussmessers auszubilden. Es bietet sich an, das Gehäuse oder den Körper des Durchflussmessers in Edelstahl und massiv auszuführen, so dass eine gute Wärmeübertragung stattfindet, bzw. der Durchflussmesser gut gekühlt wird.

Eine höhere Masse dieses Gehäuses beziehungsweise des Körpers des Durchflussmessers erfordert zwar eine längere und stärkere Kühlung, bietet jedoch den Vorteil, dass Temperaturschwankungen im Prozess der Messung weniger stark auftreten.

Als Durchflussmesser können verschiedene Durchflussmesser eingesetzt werden. Beispielhaft hierfür ist ein Coriolis-Durchflussmesser, ein Ultraschalldurchflussmesser oder ein Durchflussmesser mittels kritischer Düsen. Selbstverständlich können auch andere Arten von Durchflussmessern, die geeignet sind, Fluide, insbesondere Gase, zu messen, verwendet werden.

Vorteilhaft ist es, wenn eine Verbindung zum Übertragen bidirektionaler Infrarotsignale zwischen der Wasserstoffabgabeeinheit und dem Aufnahmetank vorgesehen ist. Hierbei kann die Verbindung als Bypass um die Messeinrichtung, aber auch durch die Messeinrichtung selbst geführt werden.

Bei in Europa üblichen Wasserstofftankstellen sind parallel innerhalb beziehungsweise am Tankschlauch Verbindungsmittel für eine Infrarotverbindung zwischen der Wasserstoffabgabeeinheit, also der Zapfsäule, und dem Aufnahmetank, beispielsweise in einem Auto, vorgesehen. Diese Infrarotverbindung, die meist kabelgebunden ist, dient zur bidirektionalen Kommunikation zwischen der Wasserstoffabgabeeinheit und dem Aufnahmetank. Wie im Folgenden noch genauer erläutert, werden hierbei die Tankparameter ausgehandelt beziehungsweise der Tankvorgang gesteuert. Die Verbindung kann aber auch drahtlos sein.

Durch das Vorsehen der bidirektionalen Infrarotverbindung während des Messvorgangs kann ein sicheres Tanken ermöglicht werden. Eine Möglichkeit ist, die Verbindung für die bidirektionalen Infrarotsignale an der Messeinheit vorbeizuführen. Anders ausgedrückt kann der Tankschlauch von der Zapfsäule an die Messeinheit angeschlossen werden, wobei die kabelgebundene Infrarotverbindung mit einem weiteren Kabel separat an der Messeinheit vorbei direkt zum Aufnahmetank, der sich in einem Kfz befinden kann, geleitet wird. Von der Messeinheit wiederum wird mit einem zweiten Betankungsschlauch eine Verbindung zu dem Tank hergestellt. So können sowohl die Infrarotsignale zwischen dem Aufnahmetank und der Wasserstoffabgabeeinheit übertragen werden als auch der Wasserstoff in den Aufnahmetank transferiert werden.

In einer anderen Ausführungsform kann die Infrarotsignalverbindung durch die Messeinheit geführt werden. Hierzu wird der Tankschlauch der Wasserstoffabgabeeinheit direkt an die Messeinheit angeschlossen. Diese leitet die Infrarotsignale wiederum weiter. Dafür kann ein entsprechender Tankschlauch zwischen der Messeinheit und dem Aufnahmetank angeschlossen werden, worüber sowohl der Wasserstoff getankt werden kann als auch die Infrarotsignale weitergeleitet werden können. Selbstverständlich sind auch Lösungen möglich, in denen die Infrarotsignale mittels einer zwischengeschalteten Funkverbindung übertragen werden.

Vorteilhafterweise weist die Messeinheit des Messsystems den Durchflussmesser sowie eine Steuer- und Auswerteeinheit auf. Die Steuer- und Auswerteeinheit dient im Wesentlichen zur Ansteuerung und Auswertung der Daten des Durchflussmessers. Dies ermöglicht eine kurze Leitungsverbindung, so dass die hochgenaue Messung weiter unterstützt wird.

Zusätzlich kann eine separate Anzeigeeinheit vorgesehen sein, welche mindestens einen Datenlogger und eine Messeinheit aufweist. Diese Anzeigeeinheit kann in Kommunikationsverbindung mit der Messeinheit stehen. Grundsätzlich ist es aber auch möglich, die Anzeigeeinheit und die Messeinheit integriert auszuführen.

Die in der Anzeigeeinheit vorgesehene Messanzeige dient zur Ausgabe der gemessenen Ergebnisse. Um eichrechtlich ausreichende Voraussetzungen zu schaffen, kann zusätzlich der Datenlogger vorgesehen sein, der alle Daten mitloggt.

Außerdem ist es möglich, in der Anzeigeeinheit weitere Auswerteelektronik vorzusehen, beispielsweise eine Datenschnittstelle, um die Daten aus dem Datenlogger herunterzuladen oder auch Mittel für eine Datenübertragung per Funk an eine übergeordnete Stelle.

Ferner betrifft die Erfindung ein Verfahren zum Ermitteln der abgegebenen Wasserstoffmenge einer Wasserstoffabgabestelle, insbesondere einer Wasserstofftankstelle, mit einer Wasserstoffabgabeeinheit an einen Aufnahmetank. Hierbei ist entsprechend der Erfindung vorgesehen, dass das zuvor beschriebene Messsystem verwendet wird. Zum Durchführen des Verfahrens wird eine fluiddichte Verbindung zwischen der Wasserstoffabgabeeinheit und der Messeinheit sowie zwischen der Messeinheit und dem Aufnahmetank aufgebaut. Hierfür kann der normale Abgabeschlauch beziehungsweise der Tankschlauch der Wasserstoffabgabeeinheit an die Messeinheit angeschlossen werden, die eine entsprechende Schnittstelle, bzw. Kupplung aufweist.

Zusätzlich wird vom Messsystem zum Aufnahmetank ein ähnlich ausgebildeter Betankungsschlauch angeschlossen. Innerhalb der Messeinheit ist ebenfalls eine fluiddichte Verbindung von dem Anschluss für die Wasserstoffabgabeeinheit zu dem Anschluss für den Aufnahmetank vorgesehen.

Anschließend wird über die fluiddichte Verbindung Wasserstoff von der Wasserstoffabgabeeinheit über den Durchflussmesser des Messsystems zum Aufnahmetank transferiert. Hierbei ist der Durchflussmesser des Messsystems in der Verbindung zwischen dem Anschluss für die Wasserstoffabgabeeinheit und dem Aufnahmetank angeordnet.

Fluid im Sinne der Erfindung kann sowohl ein Gas wie auch ein Flüssigkeit sein, obwohl im Folgenden das Beispiel von Wasserstoff als Gas näher erläutert wird.

Während des Durchflusses des Wasserstoffs durch den Durchflussmesser bei der Abgabe des Wasserstoffs von der Wasserstoffabgabeeinheit an den Aufnahmetank wird die Menge, welche durch den Durchflussmesser fließt, ermittelt. Um die zuvor beschriebene Temperaturdrift und die damit verbundenen Genauigkeitsprobleme auszuschließen, wird der Durchflussmesser vor Beginn des Transfers des Wasserstoffs von der Wasserstoffabgabeeinheit an den Aufnahmetank aktiv gekühlt. Im Rahmen der Erfindung bedeutet vor Beginn des Transfers, dass die Kühlung derart rechtzeitig begonnen wird, dass der Durchflussmesser sich auf seiner Betriebstemperatur befindet, bevor mit dem Betankungsvorgang begonnen wird.

Vorteilhaft ist es, wenn der Durchflussmesser mit einem in den Aufnahmeraum eingebrachten Kühlmaterial, insbesondere Trockeneis, gekühlt wird. Trockeneis bietet, wie bereits beschrieben, ein relativ kostengünstiges und einfach zu handhabendes Material, welches auch unproblematisch in explosionsgeschützten Bereichen verwendet werden kann.

Die Erfindung wurde hier insbesondere in Bezug auf Wasserstoff beschrieben. Sie kann aber auch für zum hochgenauen Ermitteln einer abgegebenen Menge einer beliebigen anderen Fluides, insbesondere wenn es gekühlt transferiert wird, verwendet werden.

Die Erfindung wird nachfolgend anhand eines Ausführungsbeispiels sowie schematischen Zeichnungen näher erläutert. In diesen Zeichnungen zeigen:
- Fig. 1: ein Diagramm zur Erläuterung eines typischen Befüllvorgangs an einer Wasserstofftankstelle; und
- Fig. 2: eine vereinfachte Darstellung des erfindungsgemäßen Messsystems.

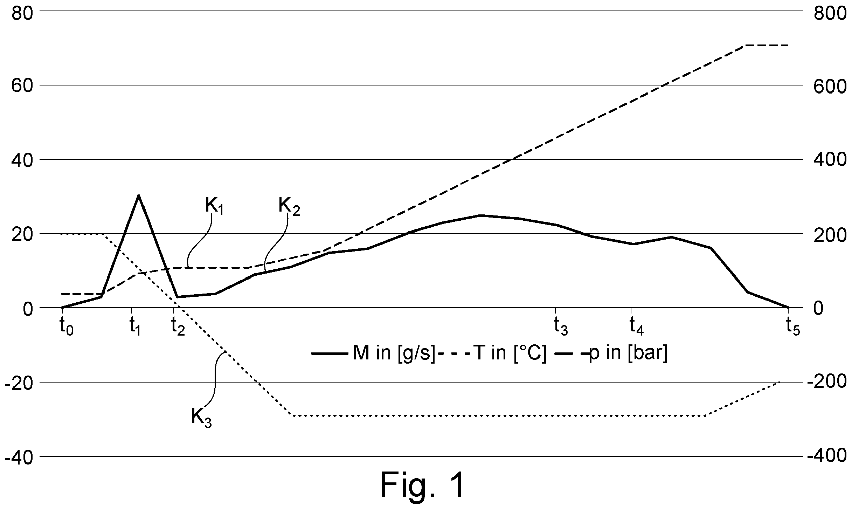

In Fig. 1 ist ein Diagramm zur Erläuterung des standardmäßigen Befüllvorgangs an einer Wasserstofftankstelle dargestellt.

Hierbei sind drei unterschiedliche Kurven K₁, K₂ und K₃ über die Zeit gezeigt. Bei der Kurve K₁ handelt es sich um den im beziehungsweise am Aufnahmetank anliegenden Druck. K₂ zeigt den Massenstrom durch einen Verbindungsschlauch zwischen der Abgabestelle und dem Aufnahmetank. K₃ verdeutlicht die Temperatur im Tankschlauch während des Tankvorgangs.

In Fig. 1 ist auf der Abszisse die Zeit während des Betankungsvorgangs eingetragen. Auf der linken Ordinate ist der Massenstrom in g/s für Kurve K₃ gezeigt. Auf der rechten Ordinate ist mit derselben Auflösung der Druck in bar für Kurve K₁ sowie die Temperatur in °C für Kurve K₃ dargestellt.

Im Folgenden wird der Betankungsvorgang grundsätzlich erläutert: Zum Zeitpunkt t₀ wird der Betankungsschlauch zwischen der Wasserstoffabgabeeinheit, also der Zapfsäule und dem Aufnahmetank angeschlossen. Zum Zeitpunkt t₁ wird über das System der Tankstelle ein hoher Druckimpuls in das geschlossene Schlauchsystem eingeleitet, der jedoch nur eine kurze Dauer hat. Anschließend wird geprüft, ob der Druck aufrechterhalten werden kann oder nicht. Hiermit wird sichergestellt und überprüft, ob die Verbindung fluiddicht ist. Anschließend wird zum Zeitpunkt t₂ mit der Betankung begonnen.

Standardmäßig haben Wasserstofftankstellen in Europa drei verschiedene Tanks: einen Niederdrucktank bis etwa 200 bar, einen Mitteldrucktank bis etwa 600 bar und einen Hochdrucktank mit einer Füllung zwischen 700 bar und 800 bar. Zum Zeitpunkt t₃ wird durch die Tankstelle ermittelt, dass die Füllung aus dem Niederdrucktank, mit dem zuerst begonnen wurde, nicht mehr ausreichend schnell verläuft und auf den Mitteldrucktank umgeschaltet. Zum Zeitpunkt t₄ findet dieselbe Ermittlung beim Mitteldrucktank statt, so dass auf den Hochdrucktank umgeschaltet wird. Zum Zeitpunkt t₅ ist der Tankvorgang beendet, da der maximale erlaubte Druck im Tank des Fahrzeugs vorhanden ist. Weitere Ausführungsformen von Wasserstofftankstellen nutzen tiefkalten flüssigen Wasserstoff, der verdampft und komprimiert in einem ähnlichen Prozess als hochverdichteter Wasserstoff zur Fahrzeugbetankung genutzt wird.

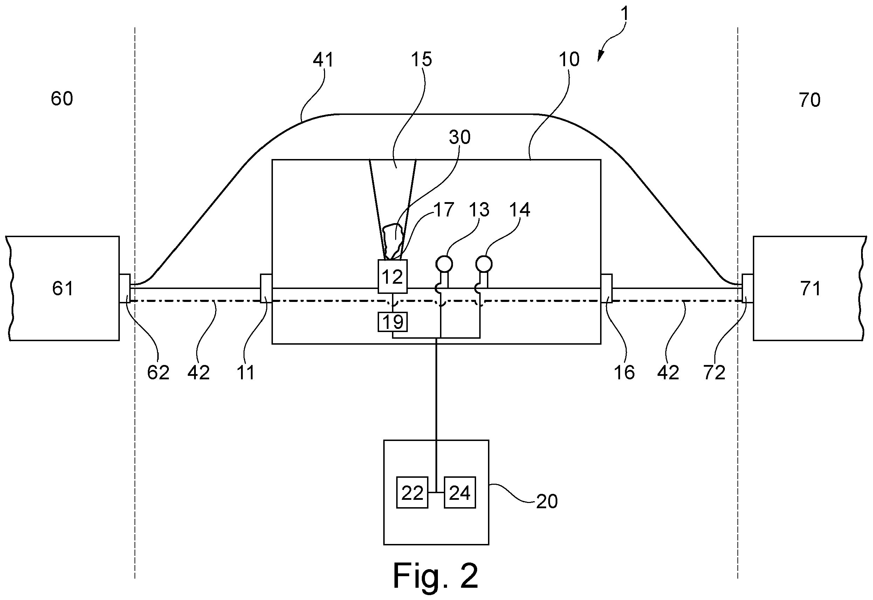

Mittels des erfindungsgemäßen Messsystems, welches im Folgenden näher erläutert wird und in Fig. 2 schematisch dargestellt ist, kann der Massenstrom während des Betankungsvorgangs hochgenau ermittelt werden.

In Fig. 2 ist zunächst auf der linken Seite eine Wasserstoffabgabestelle 60, beispielsweise in Form einer Tankstelle, vorgesehen. Diese weist eine Wasserstoffabgabeeinheit 61 auf, an der ein Anschlussstutzen 62 vorgesehen ist. Auf der rechten Seite der Figur ist ein Kfz 70 dargestellt, in dem ein Aufnahmetank 71 angeordnet ist, der wiederum einen Anschlussstutzen 72 aufweist.

Im Normalbetrieb würde eine direkte fluiddichte Verbindung mit einem Abgabeschlauch zwischen der Wasserstoffabgabestelle 61 beziehungsweise dem Anschlussstutzen 62 und dem Aufnahmetank 61 beziehungsweise dessen Anschlussstutzen 72 aufgebaut. Um jedoch eine Eichung der durch die Wasserstoffabgabeeinheit 61 abgegebene Wasserstoffmenge oder ein zusätzliches Überprüfen vorzusehen, wird ein erfindungsgemäßen Messsystem 1 dazwischengeschaltet.

Das erfindungsgemäße Messsystem 1 besteht aus zwei Hauptkomponenten. Zum einen eine Messeinheit 10 zum anderen eine Anzeigeeinheit 20.

In der Messeinheit 10 ist ein Durchflussmesser 12 vorgesehen, welcher eine entsprechende Steuer- und Auswerteeinheit 19 aufweist. Ferner sind zwei Anschlussstutzen 11, 16 vorgesehen. Zwischen den beiden Anschlussstutzen 11, 16 ist eine fluiddichte Verbindung vorgesehen, die durch den Durchflussmesser 12 geleitet ist. An dieser Verbindung sind zusätzlich ein Temperatursensor 13 und ein Drucksensor 14 angeordnet. Die Anzeigeeinheit 20 weist in der exemplarisch ausgeführten Form einen Datenlogger 22 sowie eine Messanzeige 24 auf. Sowohl der Datenlogger 22 als auch die Messanzeige 24 stehen in Kommunikationsverbindung mit der Steuer- und Auswerteeinheit 19 sowie dem Temperatursensor 13 und dem Drucksensor 14. Diese Verbindungen sind in Fig. 1 nur angedeutet.

Um eine Messung der abgegebenen Menge durchzuführen, wird entsprechend der Erfindung eine fluiddichte Verbindung zwischen der Wasserstoffabgabeeinheit 61 beziehungsweise deren Anschluss 62 und dem Anschlussstutzen 11 der Messeinheit 10 sowie dem Anschlussstutzen 16 der Messeinheit 10 und dem Anschlussstutzen 72 des Aufnahmetanks 71 hergestellt. Nun kann über die Wasserstoffabgabeeinheit 61 Wasserstoff in den Aufnahmetank 71 fließen. Hierzu wird das zuvor in Bezug auf Fig. 1 beschriebene Verfahren angewendet.

Da der Wasserstoff hochkomprimiert ist und zunächst in einen leeren Tank 71 gefüllt wird, erwärmt er sich in dem Aufnahmetank 71 wieder. Da die Tanks gerade im Kfz 70 jedoch nur bis zu einer Temperatur von ca. + 80°C zugelassen sind, muss diese Erwärmung größtenteils vermindert beziehungsweise verhindert werden. Aus diesem Grund wird der von der Wasserstoffabgabestelle 60 über die Wasserstoffabgabeeinheit 61 abgegebene Wasserstoff gekühlt geliefert. Dies führt dazu, dass in der fluiddichten Verbindung während der Abgabe des Wasserstoffs eine Temperatur im Bereich von - 10°C bis - 30°C vorliegt.

Dies führt jedoch zu Problemen bei der Messgenauigkeit des Durchflussmessers 12, da hier ein sehr großer Temperaturbereich abgedeckt werden muss. So tritt ein Nullpunktdrift auf, der für eine eichtechnische Messung nicht mehr akzeptabel ist.

Aus diesem Grund wird entsprechend der Erfindung vorgeschlagen, den Durchflussmesser 12 aktiv zu kühlen. Hierfür ist entsprechend der Erfindung in der Messeinheit 10 eine Aufnahme 15 vorgesehen, die von außen zugänglich ist. In Fig. 1 ist in dieser Aufnahme 15 vereinfacht ein externes Kühlmaterial 30, beispielsweise Trockeneis, vorgesehen. Die Aufnahmeeinrichtung 15 ist so konstruiert, dass sie im Bereich des Durchflussmessers 12 endet und beispielsweise eine gemeinsame Wand 17 mit dem Durchflussmesser 12 aufweist. So entsteht ein thermischer Kontakt, so dass der Durchflussmesser 12 gekühlt werden kann.

Wird beispielsweise als Kühlmaterial 30 Trockeneis verwendet, so bietet es den Vorteil, dass es relativ einfach zu beschaffen und kostengünstig ist. Auch in dem explosionsgeschützten Bereich einer Tankstelle kann es verwendet werden, da es inert ist.

Die während einer derartigen Messung ermittelten Daten, zum einen der Steuer- und Auswerteeinheit 16 zum Durchfluss und zum anderen der fakultativ vorgesehenen Daten des Temperatursensors 13 und des Drucksensors 14, werden an die Anzeigeeinheit 20 weitergeleitet und dort sowohl in einem Datenlogger 22 gespeichert als auch an einer entsprechenden Messanzeige 24 dargestellt zu werden.

Um eine Kommunikation zwischen der Wasserstoffabgabe 61 und dem Aufnahmetank 71 zu ermöglichen, ist entsprechend der Standards eine Infrarotverbindung, welche kabelgebunden ausgeführt sein kann, vorgesehen. Über diese Infrarotverbindung werden zwischen dem Aufnahmetank 71 und der Wasserstoffabgabeeinheit 61 Informationen zum Betankungszustand und dergleichen ausgetauscht.

Um diese Kommunikation weiterhin zu erlauben, sind entsprechend der Erfindung zwei Möglichkeiten vorgeschlagen. Diese sind beide in Fig. 2 dargestellt, wobei normalerweise nicht beide Möglichkeiten gleichzeitig verwendet werden.

Zum einen kann die Infrarotverbindung an dem Messsystem 1 vorbeigeleitet werden, wie es mit der Infrarotverbindung 41 gezeigt ist. Hierbei nimmt das Messsystem 1 keine Informationen aus dem Infrarotkanal auf. Zum anderen kann das Messsystem 1 aktiv zwischengeschaltet werden. Hierfür sind zwei Infrarotverbindungen 42 vorgesehen, die in Fig. 2 ebenfalls eingezeichnet sind.

Dies führt dazu, dass die Informationen durch die Messeinheit 10 verlaufen und dort unter Umständen mitgelesen werden können beziehungsweise auch zusätzlich ausgewertet werden können.

Der Vorteil des erfindungsgemäßen Systems besteht darin, dass hierdurch eine hochgenaue Messung durchgeführt werden kann, die jedoch nicht deutlich mehr Zeit benötigt als ein Standardtankvorgang.

Eichrechtlich sind mindestens zwei bis vier Betankungsvorgänge vorgesehen, die im erfindungsgemäßen System genau wie eine Normalbetankung an der Tankstelle ohne Weiteres durchgeführt werden können. Dies bringt einen erheblichen Zeitvorteil im Gegensatz zu bekannten Systemen.

So ist es mit dem erfindungsgemäßen Messsystem und der erfindungsgemäßen Verfahren möglich, eine Eichtestmessung einer Wasserstofftankstelle effizient und schnell durchzuführen.

## Patentansprüche

1. Messsystem (1) zum Ermitteln einer abgegebenen Wasserstoffmenge einer Wasserstoffabgabestelle (60), insbesondere einer Wasserstofftankstelle, von einer dort vorhandenen Wasserstoffabgabeeinheit (61) in Form einer Zapfsäule an einen Aufnahmetank (71),
mit einer Messeinheit (10),
wobei die Messeinheit (10) einen Durchflussmesser (12) aufweist, der zwischen der Wasserstoffabgabeeinheit (61) in Form der Zapfsäule und dem Aufnahmetank (71) anordenbar ist,
wobei das Messsystem (1) ausgebildet ist, eine fluiddichte Verbindung zwischen der Wasserstoffabgabeeinheit (61) in Form der Zapfsäule und dem Aufnahmetank (71) aufzubauen, wobei eine fluiddichte Verbindung von der der Wasserstoffabgabeeinheit (61) in Form einer Zapfsäule zur Messeinheit (10) und eine fluiddichte Verbindung von der Messeinheit (10) zum Aufnahmetank (71) aufbaubar ist,
wobei die Messeinheit ausgebildet ist von der Wasserstoffabgabeeinheit (61) in Form der Zapfsäule abgegebenen Wasserstoff durch den Durchflussmesser (12) der Messeinheit zum Aufnahmetank (71) zuleitet und
**dadurch gekennzeichnet, dass**
der Durchflussmesser (12) eine aktive Kühlung aufweist, welche ausgebildet ist, den Durchflussmesser (12) vor dem Beginn des Transfers des Wasserstoffes derart abzukühlen, dass beim Transfer im Wesentlichen keine Änderung der Temperatur im Durchflussmesser mehr auftritt.

2. Messsystem (1) nach Anspruch 1,
**dadurch gekennzeichnet,**
**dass** die aktive Kühlung eine externe Kühlung ist.

3. Messsystem (1) nach Anspruch 1 oder 2,
**dadurch gekennzeichnet,**
**dass** die aktive Kühlung mittels eines externen Kühlmaterials (30), insbesondere Trockeneis, realisiert ist.

4. Messsystem (1) nach Anspruch 1 bis 3,
**dadurch gekennzeichnet,**
**dass** eine Aufnahmeeinrichtung (15) mit thermischem Kontakt zum Durchflussmesser (12) in der Messeinheit (10) ausgebildet ist.

5. Messsystem (1) nach Anspruch 4,
**dadurch gekennzeichnet,**
**dass** die Aufnahmeeinrichtung (15) als von außen zugänglicher Hohlraum ausgebildet ist.

6. Messsystem (1) nach Anspruch 4 oder 5,
**dadurch gekennzeichnet,**
**dass** eine Wand der Aufnahmeeinrichtung (15) durch einen Körper des Durchflussmessers (12) ausgebildet ist.

7. Messsystem (1) nach einem der Ansprüche 1 bis 6,
**dadurch gekennzeichnet,**
**dass** der Durchflussmesser (12) als ein Coriolis-Durchflussmesser, ein Ultraschall-Durchflussmesser oder ein Durchflussmesser mittels kritischer Düsen ausgeführt ist.

8. Messsystem (1) nach einem der Ansprüche 1 bis 7,
**dadurch gekennzeichnet,**
**dass** eine Verbindung (41, 42) zum Übertragen kabelgebundener bidirektionaler Infrarotsignale zwischen der Wasserstoffabgabeeinheit (61) und dem Aufnahmetank (71) vorgesehen ist.

9. Messsystem (1) nach Anspruch 8,
**dadurch gekennzeichnet,**
**dass** die Verbindung (42) um die Messeinheit (10) geführt ist.

10. Messsystem (1) nach Anspruch 8,
**dadurch gekennzeichnet,**
**dass** die Verbindung (42) durch die Messeinheit (10) geführt ist.

11. Messsystem (1) nach einem der Ansprüche 1 bis 10,
**dadurch gekennzeichnet,**
**dass** die Messeinheit (10) den Durchflussmesser (12) und eine Steuer- und Auswerteeinheit (19) aufweist.

12. Messsystem (1) nach einem der Ansprüche 1 bis 11,
**dadurch gekennzeichnet,**
**dass** eine Anzeigeeinheit (20) vorgesehen ist, die mindestens einen Datenlogger (22) und eine Messanzeige (14) aufweist und
**dass** die Anzeigeeinheit (20) in Kommunikationsverbindung mit der Messeinheit (10) steht.

13. Verfahren zum Ermitteln der abgegebenen Wasserstoffmenge einer Wasserstoffabgabestelle (60), insbesondere einer Wasserstofftankstelle, mit einer Wasserstoffabgabeeinheit (61) in Form einer Zapfsäule an einen Aufnahmetank (71),
wobei ein Messsystem mit einer Messeinheit (10) verwendet wird, wobei die Messeinheit (10) einen zwischen der Wasserstoffabgabeeinheit (61) in Form der Zapfsäule und dem Aufnahmetank (71) anordbaren Durchflussmesser (12) aufweist,
wobei eine fluiddichte Verbindung zwischen der Wasserstoffabgabeeinheit (61) in Form der Zapfsäule und der Messeinheit (10) sowie zwischen der Messeinheit (10) und dem Aufnahmetank (71) aufgebaut wird,
wobei über die fluiddichte Verbindung Wasserstoff von der Wasserstoffabgabeeinheit (61) in Form der Zapfsäule über den Durchflussmesser (12) der Messeinheit (10) des Messsystems (1) zum Aufnahmetank (71) transferiert wird,
wobei der Durchfluss von Wasserstoff durch den Durchflussmesser (12) während der Abgabe des Wasserstoffes von der Wasserstoffabgabeeinheit (61) an den Aufnahmetank (71) ermittelt wird und
**dadurch gekennzeichnet, dass**
der Durchflussmesser (12) vor Beginn des Transfers des Wasserstoffes von der Wasserstoffabgabeeinheit (61) an den Aufnahmetank (71) aktiv gekühlt wird, so dass beim Transfer im Wesentlichen keine Änderung der Temperatur im Durchflussmesser mehr auftritt.

14. Verfahren nach Anspruch 13,
**dadurch gekennzeichnet,**
**dass** der Durchflussmesser (12) mittels in den Aufnahmeraum (15) eingebrachten Kühlmaterials (30), insbesondere Trockeneis, gekühlt wird.

## Claims

1. Measuring system (1) for determining a dispensed amount of hydrogen of a hydrogen dispensing location (60), in particular a hydrogen fueling station, from a hydrogen dispensing unit (61) in form of a filling point present there to a receiving tank (71),
with a measuring unit (10),
wherein
the measuring unit (10) has a flowmeter (12) which can be arranged between the hydrogen dispensing unit (61) in form of the filling point and the receiving tank (71), wherein
the measuring system (1) is designed to establish a fluid-tight connection between the hydrogen dispensing unit (61) in form of the filling point and the receiving tank (71) whereby a fluid-tight connection can be established from the hydrogen-dispensing unit (61) in the form of a filling point to the measuring unit (10) and a fluid-tight connection can be established from the measuring unit (10) to the receiving tank (71),
wherein
the measuring unit is designed to lead hydrogen dispensed by the hydrogen dispensing unit (61) in form of the filling point through the flowmeter (12) of the measuring unit to the receiving tank (71) and
**characterized in that**
the flowmeter (12) has an active cooling system which is designed to cool the flowmeter (12) before the start of the transfer of the hydrogen in such a way that there is essentially no change in the temperature in the flowmeter during the transfer.

2. Measuring system (1) according to claim 1,
**characterized in that**
the active cooling is an external cooling.

3. Measuring system (1) according to claim 1 or 2,
**characterized in that**
the active cooling is realized by means of an external cooling material (30), in particular dry ice.

4. Measuring system (1) according to claim 1 to 3,
**characterized in that**
a receiving device (15) with thermal contact to the flowmeter (12) is designed in the measuring unit (10).

5. Measuring system (1) according to claim 4,
**characterized in that**
the receiving device (15) is designed as a hollow space accessible from the outside.

6. Measuring system (1) according to claim 4 or 5,
**characterized in that**
a wall of the receiving device (15) is designed by way of a body of the flowmeter (12).

7. Measuring system (1) according to any one of claims 1 to 6,
**characterized in that**
the flowmeter (12) is constructed as a Coriolis flowmeter, an ultrasonic flowmeter or a flowmeter using critical nozzles.

8. Measuring system (1) according to any one of claims 1 to 7,
**characterized in that**
a connection (41, 42) for transmitting cable-based bidirectional infrared signals between the hydrogen dispensing unit (61) and the receiving tank (71) is provided.

9. Measuring system (1) according to claim 8,
**characterized in that**
the connection (42) is guided around the measuring unit (10).

10. Measuring system (1) according to claim 8,
**characterized in that**
the connection (42) is guided through the measuring unit (10).

11. Measuring system (1) according to any one of claims 1 to 10,
**characterized in that**
the measuring unit (10) has the flowmeter (12) and a control and evaluation unit (19).

12. Measuring system (1) according to any one of claims 1 to 11,
**characterized in that**
a display unit (20) is provided which has at least a data logger (22) and a measurement display (24), and
**in that** the display unit (20) is in communication connection with the measuring unit (10).

13. Method for determining the dispensed amount of hydrogen of a hydrogen dispensing location (60), in particular a hydrogen fueling station, with a hydrogen dispensing unit (61) in form of a filling point to a receiving tank (71),
wherein
a measuring system with a measuring unit (10) is used, whereby the measuring unit (10) has a flowmeter (12) which can be arranged between the hydrogen dispensing unit (61) in the form of the filling point and the receiving tank (71),
wherein a fluid-tight connection is established between the hydrogen dispensing unit (61) in form of the filling point and the measuring unit (10) as well as between the measuring unit (10) and the receiving tank (71),
wherein via the fluid-tight connection hydrogen is transferred from the hydrogen dispensing unit (61) in form of the filling point via the flowmeter (12) of the measuring unit (10) of the measuring system (1) to the receiving tank (71),
wherein the throughflow of hydrogen through the flowmeter (12) is determined during the dispensing of the hydrogen from the hydrogen dispensing unit (61) to the receiving tank (71), and
is **characterized in that**
the flowmeter (12) is actively cooled before the beginning of the transfer of the hydrogen from the hydrogen dispensing unit (61) to the receiving tank (71) such that substantially no change in temperature occurs in the flowmeter during the transfer.

14. Method according to claim 13,
**characterized in that**
the flowmeter (12) is cooled by means of cooling material (30), in particular dry ice, introduced into the receiving space (15).

## Revendications

1. Système de mesure (1) pour déterminer une quantité d'hydrogène distribuée d'un point de distribution d'hydrogène (60), en particulier d'un réservoir d'hydrogène, d'une unité de distribution d'hydrogène (61) présente à cet endroit sous la forme d'un distributeur sur un réservoir de réception (71),
avec une unité de mesure (10),
dans lequel
l'unité de mesure (10) présente un débitmètre (12), qui peut être disposé entre l'unité de distribution d'hydrogène (61) sous la forme du distributeur et du réservoir de réception (71),
dans lequel
le système de mesure (1) est réalisé pour établir une liaison étanche aux fluides entre l'unité de distribution d'hydrogène (61) sous la forme du distributeur et le réservoir de réception (71), dans lequel une liaison étanche aux fluides peut être établie depuis l'unité de distribution d'hydrogène (61) sous la forme d'un distributeur à l'unité de mesure (10) et une liaison étanche aux fluides peut être établie depuis l'unité de mesure (10) au réservoir de réception (71),
dans lequel
l'unité de mesure est réalisée pour acheminer l'hydrogène distribué par l'unité de distribution d'hydrogène (61) sous la forme du distributeur à travers le débitmètre (12) au réservoir de réception (71),
**caractérisé en ce que**
le débitmètre (12) présente un refroidissement actif, lequel est réalisé pour refroidir le débitmètre (12) avant le début du transfert de l'hydrogène de telle manière que lors du transfert sensiblement aucun changement de la température ne se produit dans le débitmètre.

2. Système de mesure (1) selon la revendication 1,
**caractérisé en ce**
**que** le refroidissement actif est un refroidissement externe.

3. Système de mesure (1) selon la revendication 1 ou 2,
**caractérisé en ce**
**que** le refroidissement actif est réalisé au moyen d'un matériau de refroidissement externe (30), en particulier de la neige carbonique.

4. Système de mesure (1) selon la revendication 1 à 3,
**caractérisé en ce**
**qu'**un dispositif de réception (15) est réalisé en contact thermique avec le débitmètre (12) dans l'unité de mesure (10).

5. Système de mesure (1) selon la revendication 4,
**caractérisé en ce**
**que** le dispositif de réception (15) est réalisé en tant qu'espace creux accessible depuis l'extérieur.

6. Système de mesure (1) selon la revendication 4 ou 5,
**caractérisé en ce**
**qu'**une paroi du dispositif de réception (15) est réalisée par un corps du débitmètre (12).

7. Système de mesure (1) selon l'une quelconque des revendications 1 à 6,
**caractérisé en ce**
**que** le débitmètre (12) est réalisé en tant que débitmètre de Coriolis, un débitmètre à ultrasons ou un débitmètre au moyen de buses critiques.

8. Système de mesure (1) selon l'une quelconque des revendications 1 à 7,
**caractérisé en ce**
**qu'**une liaison (41, 42) est prévue pour transmettre des signaux infrarouges bidirectionnels filaires entre l'unité de distribution d'hydrogène (61) et le réservoir de réception (71).

9. Système de mesure (1) selon la revendication 8,
**caractérisé en ce**
**que** la liaison (42) est guidée autour de l'unité de mesure (10).

10. Système de mesure (1) selon la revendication 8,
**caractérisé en ce**
**que** la liaison (42) est guidée à travers l'unité de mesure (10).

11. Système de mesure (1) selon l'une quelconque des revendications 1 à 10,
**caractérisé en ce**
**que** l'unité de mesure (10) présente le débitmètre (12) et une unité de commande et d'évaluation (19).

12. Système de mesure (1) selon l'une quelconque des revendications 1 à 11,
**caractérisé en ce**
**qu'**est prévue une unité d'affichage (20), qui présente au moins un enregistreur de données (22) et un affichage de mesure (14), et
**que** l'unité d'affichage (20) est en liaison de communication avec l'unité de mesure (10).

13. Procédé de détermination de la quantité d'hydrogène distribuée d'un point de distribution d'hydrogène (60), en particulier d'un réservoir d'hydrogène, avec une unité de distribution d'hydrogène (61) sous la forme d'un distributeur sur un réservoir de réception (71),
dans lequel un système de mesure avec une unité de mesure (10) est utilisé, dans lequel l'unité de mesure (10) présente un débitmètre (12) pouvant être disposé entre l'unité de distribution d'hydrogène (61) sous la forme du distributeur et le réservoir de réception (71),
dans lequel une liaison étanche aux fluides entre l'unité de distribution d'hydrogène (61) sous la forme du distributeur et l'unité de mesure (10) ainsi qu'entre l'unité de mesure (10) et le réservoir de réception (71) est établie,
dans lequel de l'hydrogène est transféré depuis l'unité de distribution d'hydrogène (61) sous la forme du distributeur en passant par le débitmètre (12) de l'unité de mesure (10) du système de mesure (1) au réservoir de réception (71) par l'intermédiaire de la liaison étanche aux fluides,
dans lequel le débit de l'hydrogène est déterminé par le débitmètre (12) pendant la distribution de l'hydrogène depuis l'unité de distribution d'hydrogène (61) au réservoir de réception (71), et
**caractérisé en ce que**
le débitmètre (12) est activement refroidi avant le début du transfert de l'hydrogène depuis l'unité de distribution d'hydrogène (61) au réservoir de réception (71) de sorte que lors du transfert, sensiblement plus aucun changement de la température dans le débitmètre ne se produit.

14. Procédé selon la revendication 13,
**caractérisé en ce**
**que** le débitmètre (12) est refroidi au moyen du matériau de refroidissement (30) introduit dans l'espace de réception (15), en particulier de la neige carbonique.
